# EUROPÄISCHE PATENTSCHRIFT

(11) **EP 2 195 175 B1**
(45) Veröffentlichungstag und Bekanntmachung des Hinweises auf die Patenterteilung: **19.03.2014**
(21) Anmeldenummer: 08836339.5
(22) Anmeldetag: 06.10.2008
(51) Int. Cl.: B42D 15/00, G03H 1/26, B42D 25/00, G03H 1/00

(54) **SICHERHEITS- UND/ODER WERTDOKUMENT MIT HOLOGRAPHISCHEM MUSTER**
SECURITY AND/OR VALUE DOCUMENT COMPRISING A HOLOGRAPHIC PATTERN
DOCUMENT DE SÉCURITÉ ET/OU DE VALEUR À MOTIF HOLOGRAPHIQUE

(30) Priorität: 05.10.2007 DE 102007048086
(43) Veröffentlichungstag der Anmeldung: 16.06.2010
(73) Patentinhaber: Bundesdruckerei GmbH, 10958 Berlin (DE)
(72) Erfinder: LEOPOLD, André, 10119 Berlin (DE); EHREKE, Jens, 12587 Berlin (DE); MUTH, Oliver, 12277 Berlin (DE); DEICHSEL, Andreas, 13503 Berlin (DE); SPRINGMAN, Edward, 10249 Berlin (DE)
(74) Vertreter: Jungblut, Bernhard Jakob
(86) Internationale Anmeldenummer: PCT/DE2008/001599
(87) Internationale Veröffentlichungsnummer: WO 2009/043335

(56) Entgegenhaltungen:
- WO-A-00/73991
- WO-A-03/031198
- WO-A-2006/021102
- WO-A-2007/115785
- WO-A-2008/110163
- WO-A-2008/141773
- WO-A1-02/36357
- WO-A1-2005/070693

## Beschreibung

### Gebiet der Erfindung

Die Erfindung betrifft ein Sicherheits- und/oder Wertdokument mit einem Substrat und mit zumindest einem auf dem Substrat angeordneten Sicherheitselement, wobei das Sicherheitselement ein aus zumindest zwei Teilmustern bestehendes und auf das Substrat aufgebrachtes Muster aufweist, wobei die Teilmuster registergenau lateral auf dem Substrat aneinander anschließen, und wobei zumindest ein Teilmuster holographisch aktiv ist. Die Erfindung betrifft des Weiteren ein Verfahren zu dessen Herstellung sowie ein Verfahren zu dessen Verifizierung.

### Stand der Technik und Hintergrund der Erfindung

Klassische Sicherheitselemente im Sicherheitsdruck sind beispielsweise Guillochen. Ziel ist es, das Kopieren oder Nachstellen zu verhindern oder zumindest zu erschweren. Dies wird mittels der eingesetzten Drockpräzision, Farbmischungen bzw. Farbverläufe (beispielsweise mittels Irisdruck) und anderer Maßnahmen erreicht, die mit allgemein zugänglichen Drucktechnologien nur schwer nachzustellen sind.

Ein Sicherheits- und/oder Wertdokument des eingangsgenannten Aufbaus ist als sogenannte "zero.zero"-Technologie der Firma OVD Kinegram bekannt. Dabei werden geprägte Hologramme mit einer zur holographischen Beugung erforderlichen Metallisierung eingesetzt. Dabei erfolgt eine Einbindung in das Sicherheits- und/oder Wertdokument dergestalt, dass eine räumliche Trennung zwischen Druck und Hologrammfolie nicht mehr besteht. In diesen Zusammenhängen wird zur registergenauen Anpassung der Muster von Druck und Hologramm eine präzise Demetallisierung direkt um Beugungstrukturen herum eingesetzt. Dies ist aufwändig, insbesondere der Schritt der Demetallisierung ist komplex.

Desweiteren sind sogenannte Volumenhologramme bekannt. Hierbei wird eine Schicht aus einem HRM (Holographic Recording Material) unter holographischen Bedingungen belichtet. Volumenhologramme erreichen eine vergleichsweise höhere Beugungseffizienz und können zudem als Reflexionshologramme ausgebildet sein, bei welchen die Braggebenen im Wesentlichen parallel zur Oberfläche stehen. Daher ist eine metallisierte Folie nicht notwendig. Als HRM kommen beispielsweise die fachüblichen Photopolymere in Frage. Aber auch andere Materialien sind geeignet. Geeignete Materialen für HRMs sind der Fachliteratur entnehmbar und alle dort beschriebene HRMs sind im Rahmen der vorliegenden Erfindung einsetzbar.

Im Bereich der Sicherheits- und/oder Wertdokumente werden solche Volumenhologramme als (ggf. transparenter) Film ausgebildet und auf eine bedruckte Kernschicht aufgebracht. Ebenso ist ein Einlaminieren des holographischen Films zwischen andere Schichten des Sicherheits- und/oder Wertdokuments möglich. Eine registergenaue Ausrichtung unter Anforderungen der Genauigkeit einer Guilloche ist praktisch nicht effizient zu erreichen. WO 2006/021102 zeigt die Kombination von einem Volumenhologramm mit einem anderen Sicherheitsmerkmal um ein Gesamtbild auszubilden.

### Technisches Problem der Erfindung

Der Erfindung liegt daher das technische Problem zu Grunde, ein Sicherheits- und/oder Wertdokument und ein Verfahren zu dessen Herstellung anzugeben, bei welchem auf einfache aber präzise Weise verschiedene Teilmuster, eines Musters wobei zumindest ein Teilmuster ein holographisch ist, auf einfache Weise registergenau miteinander verbindbar sind.

### Grundzüge der Erfindung und bevorzugte Ausführungsformen

Zur Lösung dieses technischen Problems lehrt die Erfindung ein Sicherheits- und/oder Wertdokument mit einem transparenten Substrat und mit zumindest einem auf dem Substrat angeordneten Sicherheitselement, wobei das Sicherheitselement ein aus zumindest zwei Teilmuster bestehendes und auf das Substrat aufgedrucktes Muster aufweist, wobei die Teilmuster registergenau lateral auf dem Substrat aneinander anschließen, und wobei i) entweder ein erstes Teilmuster nicht-holographisch ist und ein zweites Teilmuster aus einem holographisch belichteten HRM gebildet ist, oder ii) das erste Teilmuster sowie das zweite Teilmuster jeweils aus inem holographisch belichteten HRM gebildet sind, wobei das erste Teilmuster und das zweite Teilmuster unter unterschiedlichen holographischen Bedingungen belichtet sind. Hierbei ist wesentlich, dass beide (oder mehrere) Teilmuster mit der gleichen Drucktechnologie und innerhalb eines Druckvorganges gedruckt worden sind. Damit wird eine registergenaue Anpassung der verschiedenen Teilmuster erreicht und zwar mit einer für die verwendete Drucktechnologie typischen Genauigkeit. Zusätzliche Arbeitsgänge, wie der Schritt der Demetallisierung beim Einsatz von Prägehologrammen sind nicht erforderlich.

Der Begriff des Substrates bezeichnet hierbei jede beliebige Trägerschicht oder Folie, wobei es sich nicht notwendigerweise um die Kernschicht eines Sicherheits- und/oder Wertdokuments handeln muss.

Als Muster kommen grundsätzlich alle beliebigen Muster in Frage, wobei es sich typischerweise um regelmäßige bzw. periodische Strukturen aus Linien, Punkten, geometrischen Figuren und dergleichen handelt.

Der Begriff der Teilmuster bezeichnet hierbei Strukturen, die zusammen betrachtet das (Gesamt-) Muster ergeben. Im Rahmen der Erfindung unterscheiden sich die Teilmuster im Wesentlichen dadurch, dass sie unterschiedliche Farben aufweisen und/oder mit unterschiedlichen Druckfarben gebildet sind.

Im Einzelnen bestehen im Rahmen der Erfindung verschiedene Möglichkeiten der weiteren Ausbildung.

Das Muster kann mit Linien gebildet sein, welche eine Linienbreite im Bereich von 1 bis 500 µm, insbesondere von 50 bis 300 µm, aufweisen, vorzugsweise ein Guillochenmuster ist, und wobei die Liniendichte zwischen 1 bis 1000 Linien je cm², beispielsweise 2 bis 300 Linien je cm², insbesondere zwischen 10 bis 100 Linien je cm², beträgt. Ein Guillochenmuster ist ein nach definierten geometrischen Regeln verschlungenes Schutzlinienwerk. Die Linien können beispielsweise wellen-, bogen- oder kreislinienförmig verlaufen. Der Begriff der Liniendichte bezeichnet die Anzahl von verschiedenen Linien, die innerhalb einer Flächeneinheit zählbar ist. Linien eines Guillochenmusters verlaufen in der Regel parallel zueinander, i.e. mit einem Winkel zueinander, welcher kleiner als 10°, insbesondere kleiner als 5° ist.

In einer Variante ist das erste Teilmuster nicht-holographisch und mit einer im Bereich des sichtbaren Lichtes absorbierenden Farbe oder mehreren verschiedener solcher Farben, i.e. mit einer oder mehreren normalen Druckfarbe, gebildet. Es ist aber möglich, das erste Teilmuster durch eine optisch aktive Farbe, i.e. eine im Sichtbaren emittierende Farbe, beispielsweise eine lumineszierende Farbe, zu bilden. Aber auch Anti-Stokes-Farben bzw. Farben, welche Photochromie oder Thermochromie zeigen, sind einsetzbar. Geeignete Druckfarben bzw. Tinten für die verschiedenen Drucktechnologien sind dem Fachmann vertraut und brauchen hier nicht näher erläutert zu werden. Der Mehrfarbendruck von beispielsweise Guillochen ist den Fachmann ebenfalls gut vertraut.

Das zweite Teilmuster kann, muss aber nicht, seinerseits aus zumindest zwei Untermustern bestehen, wobei die Untermuster unter verschiedenen holographischen Bedingungen belichtet sind. Verschiedene holographische Bedingungen umfassen insbesondere unterschiedliche Wellenlängen der Belichtung und/oder unterschiedliche Ausbildung des Holographiemasters in den den Untermuster zugeordneten Bereichen.

Das zweite Teilmuster kann mit einer Abbildung holographisch belichtet sein. Als Abbildungen kommen in Frage beispielsweise Passbild, Zeichen, Wappen, Zeichenfolgen aus Buchstaben und/oder Zahlen, Barcodes etc.

In einer Weiterbildung ist es möglich, dass das Muster mit einer optisch aktiven Farbe unter- oder überdruckt ist. Das kann für beide Teilmuster vorgesehen sein, oder nur für ein Teilmuster, während ein anderes Teilmuster nicht unter- oder überdruckt ist. Dabei kann es sich beispielsweise um im sichtbaren Wellenlängenbereich transparente funktionale Farben handeln, die z.B. nur unter einer definierten Wellenlänge, unter Druck oder unter erhöhter Temperatur eine Funktion ausüben, sei es Absorption oder Emission. Beispiele hierfür sind Lumineszenzfarben, wie UV-fluoreszierende oder phosphoreszierende Farben. Aber auch Anti-Stokes-Farben bzw. Farben, welche Photochromie oder Thermochromie zeigen, sind einsetzbar. Mit solchen Farben können beispielsweise vor dem Aufdrucken des Musters fluoreszierende Strukturen gedruckt werden, welche dann unter dem Muster angeordnet sind. Dadurch werden unter beispielsweise UV-Bestrahlung fluoreszierende Muster erzeugt.

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen transparenten Werkstoffe Kunststoffbasis in Frage. Unterhalb des Substrates kann, muss aber nicht zwingend eine ggf. auch nicht-transparente Kernschicht angeordnet sein, wobei auf der gegenüber liegenden Seite der Kernschicht weitere Schichten, beilspielsweise spiegelsymmetrisch zur Mittelebene der Kernschicht, angeordnet sein können.

Die Erfindung betrifft des Weiteren ein Verfahren zur Herstellung eines erfindungsgemäßen Sicherheits- und/oder Wertdokuments, mit den folgenden Verfahrensschritten: a) auf ein Substrat werden gleichzeitig oder nacheinander das erste Teilmuster und das zweite Teilmuster in einem einzigen Druckprozess aufgedruckt, b) zumindest das zweite Teilmuster wird holographisch belichtet, c) das HRM des ersten Teilmusters und/oder des zweiten Teilmusters wird optional fixiert, und d) das Substrat mit den beiden Teilmustern wird in einen Verbund aus einer Mehrzahl von Schichten integriert, insbesondere einlaminiert bzw. auflaminiert oder aufgeklebt. Vor oder nach der holographischen Belichtung kann eine thermische Behandlung durchgeführt werden. Im Falle beispielsweise des Einsatzes eines Photopolymers muss eine thermische Behandlung vor der Belichtung, beispielsweise zum Zwecke der Trocknung, unterhalb, insbesondere zumindest 10 °C unterhalb, besser zumindest 40 °C unterhalb der Fixiertemperatur liegen. Nach der Belichtung kann die thermische Behandlung, beispielsweise zum Zwecke des Fixierens, auch oberhalb der Fixiertemperatur liegen. Im Einzelnen kann das Substrat vor dem Integrieren in den Verbund mit einer vorzugsweise auf der Druckseite angebrachten Release Folie versehen sein. Dann läßt sich das Substrat zwischenlagern bzw. zwischenverarbeiten, beispielsweise aufrollen, und vor dem Aufkleben wird die Release Folie dann entfernt. Dabei ist in der Regel zwischen der release Folie und dem Substrat eine Adhäsivschicht eingerichtet.

Das grundsätzliche Vorgehen bei der holographischen Belichtung von HRMs bzw. Photopolymeren zur Erzeugung von Volumenhologrammen ist beispielsweise in der Literaturstelle EP 0 896 260 A2 beschrieben. Die Grundzüge werden folgend kurz erläutert. Zunächst wird ein Holographie-Master mit einem Masterhologramm hergestellt. Im einfachsten Fall handelt es sich dabei um eine holographische Mattscheibe oder einen holographischen Spiegel. Der Holographiemaster kann aber auch eine Abbildung, eine kinematische Struktur oder ein Objekthologramm enthalten. Dann wird der Holographie-Master hinter das transparente Substrat mit dem aufgedruckten HRM positioniert, beispielsweise in flächigem Kontakt, ggf. getrennt durch eine Schutzfolie. Kohärentes Licht, beispielsweise aus einem Laser, wird auf die dem Holographie-Master abgewandte Seite des Substrates eingestrahlt, typischerweise mit definierter Wellenlänge und definiertem Inzidenzwinkel, nach Maßgabe des vom Holographie-Master zu rekonstruierenden holographischen Musters. Es durchdringt das Substrat, auch in den Bereichen mit aufgedrucktem HRM, und wird vom Master gebeugt bzw. reflektiert, wobei sich das Hologramm durch Interferenz mit dem einfallenden Licht rekonstruiert und das Hologramm in den mit dem HRM bedruckten bereichen abbildet und speichert durch photochemische oder photophysikalische Prozesse im HRM. Dabei kann der Holographie-Master so ausgelegt sein, dass er für mehrere Wellenlängen empfindlich ist und diese entsprechend beugt.

Im Rahmen der Erfindung ist der verwendete Druckprozess insofern irrelevant, als dass er lediglich zur Applikation der Farben bzw. Tinten einerseits und einer Lösung oder Emulsion bzw. Suspension des HRMs andererseits geeignet sein muss. Des weiteren sollte die erzielbare Schichtdicke der Farbe bzw. Tinte im Bereich zwischen 1 und 100 µm, insbesondere zwischen 5 und 20 µm, liegen in Hinblick auf die Erfordernisse bei der holographischen Belichtung des HRMs. Der Druckprozess kann beispielsweise ausgewählt sein aus Irisdruck, Offsetdruck (nass/trocken), Simultandruck, Siebdruck, Tintenstrahldruck, Rastertiefdruck, Stichtiefdruck, Flexodruck und Buchdruck bzw. Letterset.

In einer vorteilhaften Weiterbildung der Erfindung werden in der Stufe b) verschiedene Untermuster mit verschiedenen Wellenlängen belichtet. Man erhält dadurch holographische Guillochenbereiche, welche unter Belichtung mit unterschiedlichen Wellenlängen sichtbar bzw. nicht sichtbar sind. Um alle Untermuster sehen zu können, ist dann eine Belichtung mit allen bei der Belichtung eingesetzten Wellenlängen erforderlich.

In Stufe b) kann die Belichtung über einen mit einer Abbildung modulierten Spatial Light Modulator (SLM) erfolgen. Ein Spatial Light Modulator erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micromirror Device) Chip, ein LCD (Liquid Crystal Display) Transmissionsdisplay, oder ein LCOS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Abbildungen, beispielsweise in Form eines Passfotos, oder einer Zeichenfolge, wie Namen, Seriennummer, sonstige Daten, projizieren lassen. Durch die freie Ansteuerbarkeit können auch ohne Weiteres verschiedene Bilder oder Muster in zeitlicher Folge hintereinander generiert werden, wodurch auch der zweite Teilbereich auch individualisiert werden kann.

Während vorstehend und nachfolgend im Wesentlichen die Stufen der Herstellung des Substrates mit Sicherheitselement beschrieben sind, versteht es sich, dass zuvor und danach die üblichen weiteren fachüblichen Schritte der Herstellung eines Sicherheits- und/oder Wertdokuments erfolgen. So kann eine Kernschicht mit einer Bedruckung und ggf. weiteren Sicherheitselementen versehen werden. Dann könne verschiedene fachübliche Schichten, typischerweise aus Polymerwerkstoffen, auf beiden Seiten der Kernschicht aufgelegt und in fachüblicher Weise angeordnet und gefügt werden. Zumindest eine dieser Schichten ist das Substrat mit dem erfindungsgemäßen Sicherheitselement. Dann können die verschiedenen Schichten miteinander verbunden werden, beispielsweise durch Verkleben oder Laminieren. Typischerweise ist beidseitig zu Äußerst eine transparente Overlay-Schicht angeordnet, welche darunterliegende Schichten vor mechanischer, chemischer oder sonstiger Beschädigung durch Umwelteinflüsse schützt. Anschließend an das Laminieren erfolgt typischerweise eine Personalisierung oder Individualisierung des Sicherheits- und/oder Wertdokuments.

Die Erfindung betrifft schließlich ein Verfahren zur Verifizierung eines erfindungsgemäßen Sicherheits- und/oder Wertdokuments, wobei das Sicherheits- und/oder Wertdokument einer Belichtung ausgesetzt wird, unter welcher eine holographische Rekonstruktion erfolgt und wobei während dieser Belichtung das Vorhandensein sowie optional Farbe und/oder Gestalt des zweiten Teilmusters geprüft und ggf. mit einem Referenzmuster verglichen wird. Beispielsweise im Falle einer Guilloche ist bereits gleichsam ein internes Referenzmuster durch das erste Teilmuster gegeben, an welches das zweite Teilmuster registergenau anschließen muss.

Im Folgenden wird die Erfindung anhand von lediglich Ausführungsformen darstellenden Beispielen näher erläutert. Es zeigen:
- Figur 1:: eine erste Ausführungsform in Aufsicht (a) und im Querschnitt (b),
- Figur 2:: eine zweite Ausführungsform in Aufsicht (a) und im Querschnitt (b),
- Figur 3:: eine dritte Ausführungsform in Aufsicht (a) und im Querschnitt (b),
- Figur 4:: eine vierte Ausführungsform in Aufsicht (a) und im Querschnitt (b), und
- Figur 5:: eine schematische Darstellung einer holographischen Belichtung.

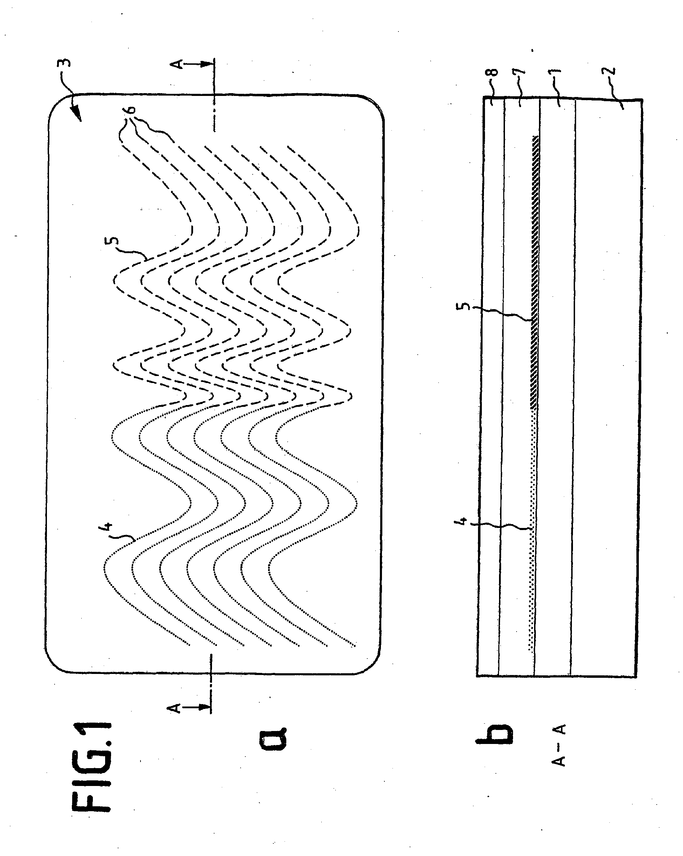

In der Figur 1 erkennt man ein Sicherheits- und/oder Wertdokument mit einem transparenten Substrat 1 und mit einem auf dem Substrat 1 angeordneten Sicherheitselement, wobei das Sicherheitselement ein aus zwei Teilmustern 4, 5 bestehendes und auf das Substrat 1 aufgedrucktes Muster 3 aufweist. Der Aufsicht der Figur 1a entnimmt man, dass es sich bei dem Muster um eine aus Linien 6 gebildete Guilloche handelt. Des weiteren erkennt in der Querschnittdarstellung Figur 1b eine Kernschicht 2, welche beispielsweise ihrerseits eine Bedruckung aufweisen kann. Auf dem Muster 3 sind eine Zwischenschicht 7 und eine Deckschicht 8 angeordnet, welche jeweils im Bereich der Wellenlängen des sichtbaren Lichtes transparent sind. Das erstes Teilmuster 4 ist nicht-holographisch und als herkömmliche gedruckte Guilloche ausgebildet. Das zweite Teilmuster 5 ist aus einem holographisch belichteten HRM gebildet. Man erkennt insbesondere in der Figur 1a, dass die Teilmuster 4, 5 registergenau lateral auf dem Substrat 1 aneinander anschließen. Die gepunkteten Linien des Teilmusters 4 schließen exakt an an gestrichelten Linien des Teilmusters 5, welche die Linien des Teilmusters 4 fortführen.

Der Druck des ersten Teilmusters 4 und des zweiten Teilmusters erfolgt dabei analog, i.e. mit der gleichen Drucktechnologie und in beiden Fällen direkt auf das Substrat 1, wie aus der Figur 1b ersichtlich. Die Herstellung entspricht insofern einem Mehrfarbendruck mit der Ausnahme, dass an Stelle einer anderen Farbe eine Tinte mit dem HRM getreten ist. Ein geeignetes Druckverfahren ist beispielsweise der Irisdruck. Die Farbe und die Tinte mit dem HRM werden in einen durch einen Brocken unterteilten Farbkasten oder in zwei separate Farbkästen eingebracht. Der Iriseffekt entsteht durch die Verreibebewegung der Walzen. Alternativ kann auch mit Simultandruck gearbeitet werden.

Es ergibt sich bei dem Einsatz des Irisdruckes ein Mischbereich aus konventioneller Farbe und Tinte mit HRM, und zwar kontinuierlich verlaufend. Aufgrund der sinkenden Konzentration der konventionellen Farbe im zweiten Teilmuster 5 wird dorthin der Farbeindruck dieser Farbe sinken. Gleichzeitig wird sich in Bereichen mit kleinen Konzentrationen des HRMs noch kein deutliches Hologramm ausbilden lassen, da durch die Lichtstreuung der konventionellen Farbe die Intensität des bei der holographischen Belichtung transmittierenden Lichtes reduziert ist, wodurch letztendlich der Kontrast des Interferenzmusters sinkt. Mit sinkender Konzentration der konventionellen Farbe wird dagegen die Beugungseffizienz des Hologramms zunehmen, bis zur Maximalintensität bei Erreichen des reinen HRMs.

Bei Betrachtung unter normalem Licht sieht ein Betrachter als erstes Teilmuster 4 folglich eine Guilloche, welche in Richtung des zweiten Teilmusters 5 scheinbar ausläuft. Erfolgt dagegen die Betrachtung unter einer Belichtung, bei welcher die holographischen Beugungsbedingungen erfüllt sind, sieht man das zweite Teilmuster 5 als Hologramm sich nahtlos und insbesondere registergenau an das erste Teilmuster 4 anschließen.

In der Darstellung der Figur 1 kann das erste Teilmuster 4 aber auch seinerseits aus einem holographisch belichteten HRM gebildet sein, wobei die HRMe der beiden Teilmuster 4, 5 verschieden sind, beispielsweise für verschiedene Belichtungswellenlängen empfindlich sind. Bei der holographischen Belichtung wird nun mit beiden Belichtungswellenlängen belichtet. Im Ergebnis ist das erste Teilmuster 4 ein Hologramm in der ersten Belichtungswellenlänge und das zweite Teilmuster 5 ein Hologramm in der zweiten Belichtungswellenlänge.

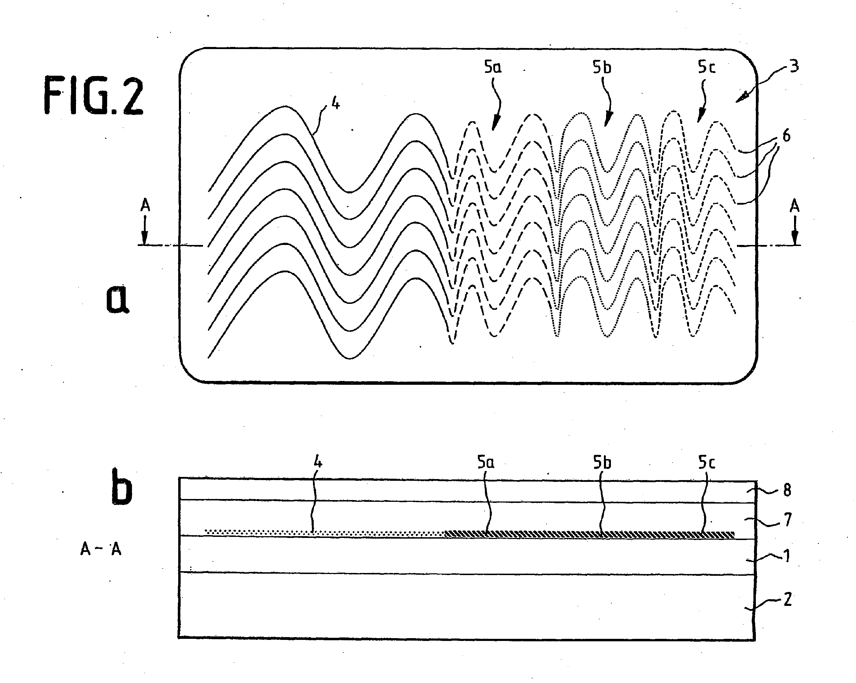

In der Figur 2 ist eine Variante dargestellt, wobei verschiedenfarbige Untermuster 5a, 5b, 5c dadurch gebildet sind, dass bei der Belichtung des (einheitlichen und für verschiedene Belichtungswellenlängen empfindlichen) HRMs des zweiten Teilmusters 5 mit einem in der Belichtungswellenlänge umschaltbaren Lichtstrahl scannend belichtet wurde.

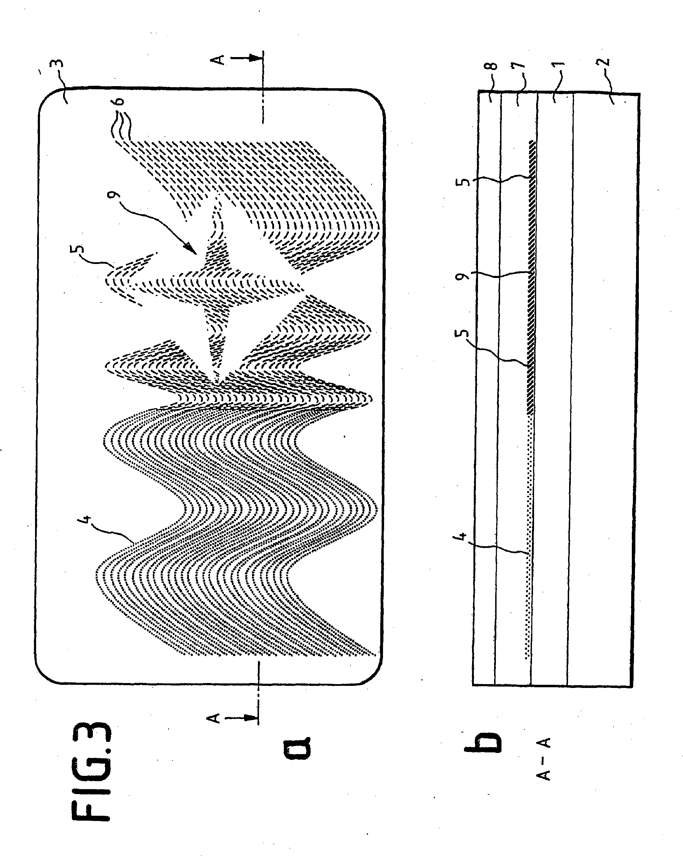

In der Ausführungsform der Figur 3 ist eine Abbildung 9, hier eine graphische Darstellung, in dem zweiten Teilmuster gebildet. Dies ist dadurch erfolgt, dass eine Vorlage der Abbildung im zur holographischen Belichtung verwendeten Holographiemaster gespeichert ist. In den linienfreien Bereichen erfolgt dabei keine Rekonstruktion, so dass die gedruckten Linien des HRMs dort entsprechend auch nicht belichtet sind.

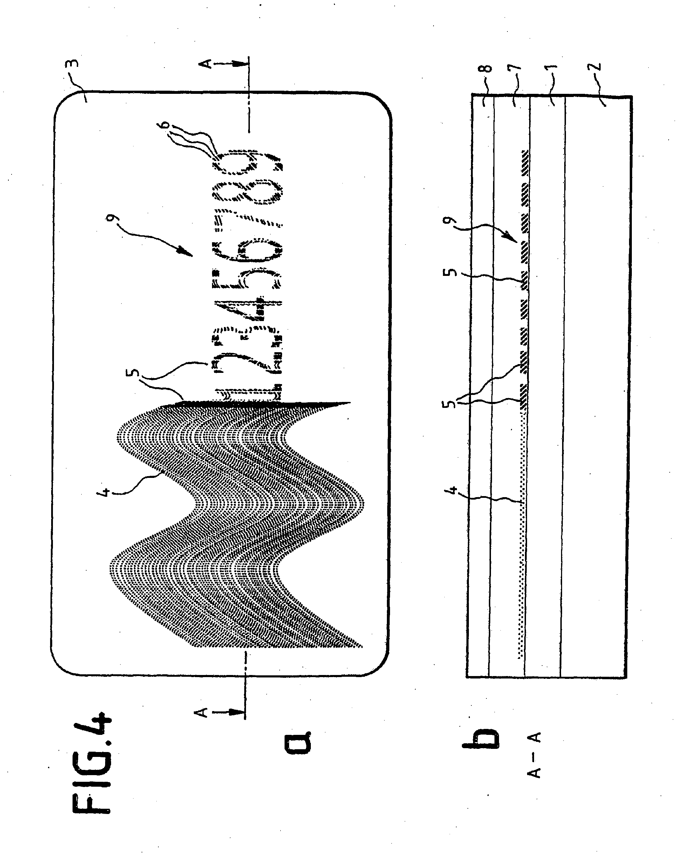

In der Figur 4 ist eine ähnliche Variante wie in der Figur 3 dargestellt. Im Unterschied handelt es sich bei der Abbildung 9 einerseits um eine Zeichenfolge. Anderseits ist die Herstellung verschieden; der Holographiemaster enthält keine graphische Vorlage, sondern ist beispielsweise lediglich ein holographische Spiegel oder eine holographische Mattscheibe, vielmehr wurde die Abbildung 9 durch Einsatz eines SLM in fachüblicher Weise erzeugt. Es wurde nur der linke Rand des zweiten Teilmusters 5 sowie die dargestellte Zeichenfolge holographisch belichtet, so dass in den nicht belichteten Bereichen bei der Betrachtung auch keine holographische Rekonstruktion stattfinden kann.

Die Kernschicht 2 in den Darstellungen der Figuren 1 bis 4 kann natürlich aus einer Mehrzahl verschiedener Schichten in fachüblicher Weise aufgebaut sein und auch Inlays, Chips und dergleichen enthalten. Insofern stellen die Schichten 1, 7 und 8 lediglich die obersten Schichten eines erfindungsgemäßen Sicherheits- und/oder Wertdokuments dar.

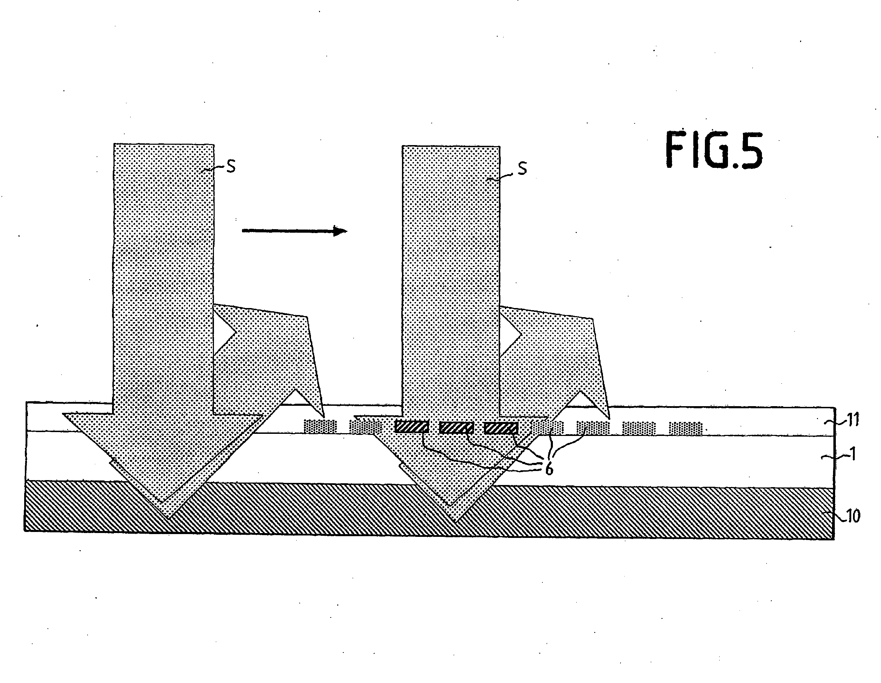

In der Figur 5 ist in schematischer Weise ein holographischer Belichtungsvorgang dargestellt. Man erkennt in starker Vergrößerung, dass im Bereich des zweiten Teilmusters 5 Linien 6 aus einem HRM auf das Substrat 1 gedruckt sind. Auf der Oberseite des Substrats 1 ist eine Release-Layer 11 angeordnet. Das Substrat ist seinerseits auf einen Holographiemaster 10 aufgelegt. Der Holographiemaster beugt das Licht des mit vorgegebener Wellenlänge einstrahlenden Belichtungsstrahls S unter einem definierten Winkel. Ein holographisches Muster bildet sich dabei nur in jenen bereichen, in welchen der Belichtungsstrahl und der vom Holographiemaster gebeugte Rückstrahl interferieren und wo sich gleichzeitig HRM befindet. Dies sind in der Figur 5 die vollschwarz gezeichneten Rechtecke.

## Patentansprüche

1. Sicherheits- und/oder Wertdokument
mit einem transparenten Substrat (1) und
mit zumindest einem auf dem Substrat (1) angeordneten Sicherheitselement,
wobei das Sicherheitselement ein aus zumindest zwei Teilmustern (4, 5) bestehendes und auf das Substrat (1) aufgedrucktes Muster (3) aufweist,
wobei die Teilmuster (4, 5) registergenau lateral auf dem Substrat (1) aneinander anschließen, und
wobei
i) entweder ein erstes Teilmuster (4) nicht-holographisch ist und ein zweites Teilmuster (5) aus einem holographisch belichteten HRM gebildet ist,
oder
ii) das erste Teilmuster (4) sowie das zweite Teilmuster (5) jeweils aus einem holographisch belichteten HRM gebildet sind, wobei das erste Teilmuster (4) und das zweite Teilmuster (5) unter unterschiedlichen holographischen Bedingungen belichtet sind,
**dadurch gekennzeichnet,**
**dass** das Muster (3) mit Linien (6) gebildet ist, wobei die Linien (6) eine Linienbreite im Bereich von 1 bis 200 µm aufweisen, und
**dass** die Teilmuster (4, 5) mit der gleichen Drucktechnologie und innerhalb eines Druckvorganges gedruckt worden sind.

2. Sicherheits- und/oder Wertdokument nach Anspruch 1, wobei das Muster als ein Guillochenmuster gebildet ist und wobei die Liniendichte vorzugsweise zwischen 1 bis 100 Linien je mm² beträgt.

3. Sicherheits- und/oder Wertdokument nach Anspruch 1 oder 2, wobei das erste Teilmuster (4) nicht-holographisch und mit einer im Bereich des sichtbaren Lichtes absorbierenden Farbe oder einer optisch aktiven Farbe gebildet ist.

4. Sicherheits- und/oder Wertdokument nach einem der Ansprüche 1 bis 3, wobei das zweite Teilmuster (5) aus zumindest zwei Untermustern (5a, 5b) besteht, wobei die Untermuster (5a, 5b) unter verschiedenen holographischen Bedingungen belichtet sind.

5. Sicherheits- und/oder Wertdokument nach einem der Ansprüche 1 bis 4, wobei das zweite Teilmuster (5) mit einer Abbildung (9) holographisch belichtet ist.

6. Sicherheits- und/oder Wertdokument nach einem der Ansprüche 1 bis 5, wobei das Muster (3) oder eines oder beide Teilmuster (4, 5) mit einer optisch aktiven Farbe unter- oder überdruckt ist.

7. Verfahren zur Herstellung eines Sicherheits- und/oder Wertdokuments nach einem der Ansprüche 1 bis 6, mit den folgenden Verfahrensschritten:
a1) auf ein Substrat (1) werden gleichzeitig oder nacheinander das erste Teilmuster (4) und das zweite Teilmuster (5) in einem einzigen Druckprozess aufgedruckt,
a2) optional erfolgt eine Trocknungsverfahrenstufe,
b) zumindest das zweite Teilmuster (5) wird holographisch belichtet,
c1) das HRM des ersten Teilmusters (4) und/oder des zweiten Teilmusters (5) wird optional fixiert,
c2) optional wird auf das Substrat Adhäsiv und/oder eine Release Folie appliziert,
d) das Substrat (1) mit den beiden Teilmustern, (4, 5) wird, ggf. nach Entfernung der Release Folie, in einen Verbund aus einer Mehrzahl von Schichten (2, 7, 8) integriert, insbesondere einlaminiert bzw. auflaminiert oder aufgeklebt.

8. Verfahren nach Anspruch 7, wobei der Druckprozess ausgewählt ist aus Irisdruck, Offsetdruck, Simultandruck, Siebdruck, Tintenstrahldruck, Rastertiefdruck, Stichtiefdruck, Flexodruck und Buchdruck.

9. Verfahren nach Anspruch 7 oder 8, wobei in der Stufe b) verschiedene Untermuster (5a, 5b) mit verschiedenen Wellenlängen belichtet werden.

10. verfahren nach einem der Ansprüche 7 bis 9, wobei in Stufe b) die Belichtung über einen mit einer Abbildung modulierten Spatial Light Modulator (SLM) erfolgt.

11. Verfahren zur Verifizierung eines Sicherheits- und/oder Wertdokuments nach einem der Ansprüche 1 bis 6, wobei das Sicherheits- und/oder Wertdokument einer Belichtung ausgesetzt wird, unter welcher eine holographische Rekonstruktion des in dem HRM gespeicherten Hologramms erfolgt und wobei während dieser Belichtung das Vorhandensein sowie optional Farbe und/oder Gestalt des zweiten Musters (5) geprüft wird.

## Claims

1. A security and/or valuable document,
comprising a transparent substrate (1), and comprising at least one security element arranged on the substrate (1),
the security element comprising a pattern (3) composed of at least two partial patterns (4, 5) and imprinted on the substrate (1),
the partial patterns (4, 5) adjoining each other in exact lateral register on the substrate (1),
and
i) either a first partial pattern (4) being non-holographic, and a second partial pattern (5) being formed from a holographically exposed HRM, or
ii) the first partial pattern (4) and the second partial pattern (5) each being formed from a holographically exposed HRM, the first partial pattern (4) and the second partial pattern (5) being exposed under different holographic conditions,
**characterized in**
**that** the pattern (3) is formed with lines (6), the lines (6) having a line width in the range from 1 to 200 µm, and
**that** the partial patterns (4, 5) have been printed by using the same printing technology and within one single printing process.

2. The security and/or valuable document according to claim 1, wherein the pattern is formed as a guilloche pattern, and wherein the line density preferably is between 1 and 100 lines per mm².

3. The security and/or valuable document according to claim 1 or 2, wherein the first partial pattern (4) is non-holographic and is formed with a color absorbing in the range of the visible light or with an optically active color.

4. The security and/or valuable document according to one of claims 1 to 3, wherein the second partial pattern (5) is composed of at least two sub-patterns (5a, 5b), wherein the sub-patterns (5a, 5b) are exposed under different holographic conditions.

5. The security and/or valuable document according to one of claims 1 to 4, wherein the second partial pattern (5) is holographically exposed with an image (9).

6. The security and/or valuable document according to one of claims 1 to 5, wherein the pattern (3) or one or both partial patterns (4, 5) is or are under- or over-printed with an optically active color.

7. A method for producing a security and/or valuable document according to one of claims 1 to 6, comprising the following steps:
a1) on a substrate (1), the first partial pattern (4) and the second partial pattern (5) are imprinted at the same time or one after the other in a single printing process,
a2) optionally, a separation step is carried out,
b) at least the second partial pattern (5) is holographically exposed,
c1) optionally, the HRM of the first partial pattern (4) and/or of the second partial pattern (5) is fixed,
c2) optionally, an adhesive and/or a release film is applied on the substrate,
d) the substrate (1) with the two partial patterns (4, 5) is integrated, if applicable after removal of the release film, in a composite of a plurality of layers (2, 7, 8), in particular is laminated in or on or is glued on.

8. The method according to claim 7, wherein the printing process is selected from rainbow printing, offset printing, simultaneous printing, screen printing, inkjet printing, photogravure printing, intaglio printing, flexo printing and letterpress printing.

9. The method according to claim 7 or 8, wherein in step b) different sub-patterns (5a, 5b) are exposed to different wavelengths.

10. The method according to one of claims 7 to 9, wherein in step b) the exposure is carried out by a Spatial Light Modulator (SLM) modulated with an image.

11. A method for verifying a security and/or valuable document according to one of claims 1 to 6, wherein the security and/or valuable document is exposed to an illumination, under which a holographic reconstruction of the hologram stored in the HRM takes place, and wherein during this illumination the presence and optionally the color and/or form of the second pattern (5) is verified.

## Revendications

1. Document de sécurité et/ou de valeur, comprenant un substrat (1) transparent et comprenant au moins un élément de sécurité disposé sur le substrat (1),
l'élément de sécurité comprenant un motif (3) constitué d'au moins deux motifs partiels (4, 5) et imprimé sur le substrat (1),
les motifs partiels (4, 5) étant directement adjacents en registre latéral exact sur le substrat (1), et
i) ou bien un premier motif partiel (4) étant non holographique et un deuxième motif partiel (5) étant réalisé à partir d'un HRM (matériau d'enregistrement holographique) holographiquement exposé, ou bien
ii) le premier motif partiel (4) et le deuxième motif partiel (5) chacun étant réalisés à partir d'un HRM holographiquement exposé, le premier motif partiel (4) et le deuxième motif partiel (5) étant exposés sous des conditions holographiques différentes,
**caractérisé en ce**
**que** le motif (3) est réalisé avec des lignes (6), les lignes (6) ayant une largeur de ligne comprise dans la gamme entre 1 et 200 µm, et
**que** les motifs partiels (4, 5) ont été imprimés en utilisant la même technologie d'impression et dans un seul procédé d'impression.

2. Document de sécurité et/ou de valeur selon la revendication 1, dans lequel le motif est réalisé comme motif guilloché, et dans lequel la densité des lignes de préférence est entre 1 et 100 lignes par mm².

3. Document de sécurité et/ou de valeur selon la revendication 1 ou 2, dans lequel le premier motif partiel (4) est non holographique et est réalisé avec une couleur absorbante dans la gamme de la lumière visible ou avec une couleur optiquement active.

4. Document de sécurité et/ou de valeur selon une des revendications 1 à 3, dans lequel le deuxième motif partiel (5) est constitué d'au moins deux sous-motifs (5a, 5b), dans lequel les sous-motifs (5a, 5b) sont exposés sous des conditions holographiques différentes.

5. Document de sécurité et/ou de valeur selon une des revendications 1 à 4, dans lequel le deuxième motif partiel (5) est holographiquement exposé avec une image (9).

6. Document de sécurité et/ou de valeur selon une des revendications 1 à 5, dans lequel le motif (3) ou un ou les deux motifs partiels (4, 5) est ou sont sous- ou sur-imprimé(s) avec une couleur optiquement active.

7. Procédé de production d'un document de sécurité et/ou de valeur selon une des revendications 1 à 6, comprenant les étapes suivantes:
a1) sur un substrat (1) sont imprimés le premier motif partiel (4) et le deuxième motif partiel (5) au même temps ou l'un après l'autre dans un seul procédé d'impression,
a2) optionnellement, une étape de séparation a lieu,
b) au moins le deuxième motif partiel (5) est holographiquement exposé,
c1) optionnellement, le HRM du premier motif partiel (4) et/ou du deuxième motif partiel (5) est fixé,
c2) optionnellement, un adhésif et/ou un film de détachement est appliqué sur le substrat,
d) le substrat (1) avec les deux motifs partiels (4, 5) est intégré, le cas échéant après enlèvement du film de détachement, dans un composite d'une pluralité de couches (2, 7, 8), en particulier est stratifié en dedans ou en dessus ou est collé en dessus.

8. Procédé selon la revendication 7, dans lequel le procédé d'impression est choisi à partir d'impression irisée, impression offset, impression simultanée, sérigraphie, impression à jet d'encre, impression en timbre-relief, impression hélio, impression flexographique et typographie.

9. Procédé selon la revendication 7 ou 8, dans lequel dans l'étape b) des différents sous-motifs (5a, 5b) sont exposés avec des différentes longueurs d'ondes.

10. Procédé selon une des revendications 7 à 9, dans lequel dans l'étape b) l'exposition est réalisée par un modulateur spatial de lumière (SLM) modulé avec une image.

11. Procédé de vérification d'un document de sécurité et/ou de valeur selon une des revendications 1 à 6, dans lequel le document de sécurité et/ou de valeur est exposé à une illumination, sous laquelle une reconstruction holographique du hologramme sauvegardé dans le HRM a lieu, et dans lequel pendant cette illumination la présence et optionnellement la couleur et/ou la forme du deuxième motif (5) est vérifiée.
